# EUROPEAN PATENT APPLICATION

(11) **EP 2 775 417 A1**
(43) Date of publication of application: **10.09.2014**
(21) Application number: 13157529.2
(22) Date of filing: 04.03.2013
(51) Int. Cl.: G06F 21/34

(54) **Computer implemented multi-factor authentication**

(71) Applicant: MFA Informatik AG, 4435 Niederdorf (CH)
(72) Inventor: Schneider, Andreas, 4435 Niederdorf (CH)
(74) Representative: Latscha Schöllhorn Partner

(57) **Abstract**

A computer implemented multi-factor authentication method for authenticating a user of a secured component (21, 31; 216; 217; 218; 219), comprises the user requesting access to the secured component (21, 31; 216; 217; 218; 219) via a client device (2); the client device (2) providing a first authentication factor (22; 226; 227, 237; 228; 229) to the user; the user providing the first authentication factor (22; 226; 227, 237; 228; 229) to a personal device (5; 56; 57; 58; 59) which is associated to the user at an authentication component (51, 61; 526, 527, 528, 529), wherein the client device (2) and the personal device (5; 56; 57; 58; 59) are physically distinct units; the user providing a second authentication factor to the personal device; the personal device (5; 56; 57; 58; 59) forwarding the first authentication factor (22; 226; 227, 237; 228; 229) and the second identification factor to the authentication component (51, 61; 526, 527, 528, 529); the authentication component (51, 61; 526, 527, 528, 529) verifying identity of the user and providing an access token (62) to the secured component (21, 31; 216; 217; 218; 219); and the secured component (21, 31; 216; 217; 218; 219) providing the user access to the secured component (21, 31; 216; 217; 218; 219) on the client device (2) in accordance with the access token (62). The method according to the invention allows for completely separating the authentication process from the application or usage of the secured component. Thereby, it can be prevented that any user credentials or authentication information of the user are to be inputted or provided to the client device. Such a separation of the authentication process allows for increasing security of the authentication process. Also, blocking the system, e.g. by applying a brute force attack, can be prevented.

## Description

### Technical Field

The present invention relates to a computer implemented multi-factor authentication method and more particularly to computer programs for implementing portions of the mentioned method and computing devices for implementing the mentioned method or parts thereof. Such methods, computer programs and computing devices can be used for authenticating a user of a secured component in a computer environment.

### Background Art

For protecting information and data in computer systems it is widespread to restrict access to information or data to specific users or groups of users. In such access restriction usually the user intending to access the information or data, e.g. via a computer application, is to be identified and authenticated. Thereby, authentication is the process of the user as a requesting first entity presenting some evidence of its identity to a second entity having the information or data or being capable of providing access to the information and/or data. For such authentication usually at least one authentication factor such as a personal identification number (PIN) or the like is used.

To increase security, often multiple authentication factors are implemented in computer authentication processes. For example, two-factor authentication is commonly found seeking to decrease the probability that the first entity, e.g. the user, is presenting false evidence of its identity. Even though the number of factors is important, the quality of the factors is also crucial for the security level implemented. Two-factor authentication requires the use of two authentication factors. Such two factors can, e.g., be a pin or login combination which usually a user has in his mind combined with a physical factor which is in the possession of the user.

For example, known multi-factor authentication comprises combinations of login credentials such as user name and password, PINs, smart cards, grid cards or similar codes, short message service (SMS) one time passwords (OTP), dedicated OTP hardware such as RSA hardtokens, Yubikeys and the like, OTP software such as RSA softtokens, cryptocards and the like, user behavior or gesture recognitions, biometric characteristics such as fingerprints or retina scans as factors. For example, a well-known two-factor authentication is when a bank customer visits a local automated teller machine (ATM), one authentication factor is the physical ATM card the customer slides into the machine which is something the user possesses. The second factor is the PIN the customer enters through the keypad which is something the user knows. Without the corroborating verification of both of these factors, authentication does not succeed.

The known authentication techniques implemented for restricting access to information or data in a computing device as entry point usually require that at least the first authentication factor and usually also the second or any further authentication factor is provided to or via the entry point. This can be dangerous for various reasons. For example, if the entry point or a network node to which the entry point is connected is hacked by a third party, infected by malware or physically rearranged such as, e.g. by skimming, the authentication credentials can be misused by the third party. This can be particularly problematic if sensitive information or data is to be accessed via a public or unverified entry point. Or, since users often tend to use the same credentials for different applications the entry point can be watched and login or personal information can be gathered potentially allowing for hacking authentication.

Therefore, there is a need for a method or system allowing a comparably secure authentication of a user which is particularly also applicable in an at least partially untrusted environment such as, e.g., via public entry points or the like.

### Disclosure of the Invention

According to the invention this need is settled by a method as it is defined by the features of independent claim 1. Preferred embodiments are subject of the dependent claims.

In particular, the invention deals with a computer implemented multi-factor authentication method for authenticating a user of a secured component. The method comprises: the user requesting access to the secured component via a client device; the client device providing a first authentication factor to the user; the user providing the first authentication factor to a personal device which is associated to the user at an authentication component wherein the client device and the personal device are physically distinct units; the user providing a second authentication factor to the personal device; the personal device forwarding the first authentication factor and the second identification factor to the authentication component; the authentication component verifying identity of the user and providing an access token to the secured component; and the secured component providing the user access to the secured component on the client device in accordance with the access token.

The access which the user is requesting can particularly relate to access to an application such as, e.g., a web application or to a system such as, e.g., to files, data or other information on a server. Thus, the secured component can be any involved component to which access is to be restricted, e.g. an application running on the client device or on a server and provided via the client device, data or files stored on a server and provided via the client device, a connection to a system or network, and the like.

Requesting access on the client device can be performed in various manners. For example, the user can open an application he intends to get access to and he is then provided with an authentication window of the application. Or, the user can enter a uniform resource locator (URL) in the web browser which is recognized as requesting access.

The client device can be any suitable computing device such as a personal computer, a laptop computer, a tablet, a smartphone, an application specific console or the like. The first authentication factor can be a code such as a numeric code, a multidimensional code, e.g. a quick response code (QR-code), a specific acoustic code or a combination thereof. It can also be comprised in such a code wherein the code particularly can additionally comprise further information. The second authentication factor can be a personal identification number (PIN), a biometric identifier such as a fingerprint or a retina scan, a voice identifier or voice message, a combination thereof or the like. In addition to the first and second authentication factors, further authentication factors can be implemented for increasing security of the method or system.

Provision of the first authentication factor to the user can be performed by displaying the first authentication factor on a display of the client device, by outputting the first authentication factor via a loudspeaker or the like. Provision of the first authentication factor to the personal device can be performed by manually entering the first authentication factor, e.g. via a keyboard or a touchscreen, by recording the first authentication factor, e.g. via a microphone, by graphically capturing the first authentication factor, e.g., via a camera, by any combination thereof or the like.

For providing the first and second authentication factors to the authentication component, the personal device or a portion of the authentication component running on the personal device can generate an identification token which comprises the first and second authentication factors. The authentication component can comprise a computer application or software run on a server to which the personal device is connected or on the personal device itself. The term "token" as used in connection with the invention, in particular with the identification token and the access token, can relate to a data package comprising specific information. The token can particularly be a ticket or data file in a predefined format which comprises the first and second identification factors and eventually also additional authentication factors or information. For example, such tokens can be provided in security assertion markup language (SAML) or in a remote authentication dial-in user service (RADIUS) protocol.

Before transferring the first authentication factor and the second authentication factor the personal device can check their plausibility such as, e.g. by calculating a checksum. In such an implementation, if plausibility is not given provision of the first and second authentication factors can be prevented or the identification token can comprise information about the detected non-plausibility of the first and/or second authentication factors.

The method according to the invention allows for an indirect authentication of the user. This means that the device on which access to the secured component is requested, i.e. the client device, which device often is also used for working with the secured component is not identical with the device on which the user is authenticated. In particular, the only authentication relevant information to which the client device has access is the necessary information for provision of the first authentication factor. This can be implemented as the comparably uncritical identification of the access request or as a simple reference to it. Like this, the authentication process can be completely separated from the application or usage of the secured component. In particular, it can be prevented that any user credentials or authentication information of the user are to be inputted or provided to the client device. Such a separation of the authentication process allows for increasing security of the authentication process, e.g., since even though if the client device is hacked there is no critical authentication information transferred via or present on the client device and therefore no such information can be gathered. Also, blocking the system, e.g. by applying a brute force attack, can be prevented.

The method according to the invention can, e.g., be used for web sites or web portals, for desktop applications, for mobile applications, for establishing secure connections such as in an internet protocol security (IPSec) virtual private network (VPN), in a secure sockets layer (SSL) VPN or the like, and in similar applications. The authentication component can be an identity provider which can collaborate with a service provider, e.g. a web portal service provider.

The first authentication factor can also comprise information about the competent authentication component or identity provider. This can be particularly helpful, if plural identity providers exist and one of them is competent for providing the access token applicable for the secured component. The method according to the invention can particularly also increase security when comparably untrusted devices are used as client device. For example, it can increase security when public computers are used for accessing the secured component, e.g. via a web portal.

Also, the method according to the invention allows for changing password or PIN or other user credentials without provision of any personal information of the user. This can increase security of such changing processes. Further, the method according to the invention allows for regularly verifying validity of the access token and for automatically blocking the access token when it is no longer valid, e.g. due to inactivity for a certain time or the like. Thereby, such blocking of the access token as well as all other blocking of the access token, e.g. described below, can be performed without blocking the whole user account. This allows the user to continue using his account even though a specific access request or access is blocked. Still further, since no user account information has to be stored on the personal device the method according to the invention is suitable for providing parallel access to plural secured components via the same personal device wherein also varying level of access to the plural secured components can be provided. This can be particularly useful for users requiring secure access to plural systems in parallel such as, e.g., a consultant working for plural companies. Furthermore, by additionally considering the circumstances of the authentication or access request tailored security features con be provided in the authentication process. For example, if the positions of the personal device and of the client device are considered as, e.g., explained below the user can automatically be logged out or the access can be blocked if the client device is too far away from the personal device.

Preferably, the secured component has a frontend portion running on the client device and a backend portion running on a backend device. In such an arrangement which can be implemented in a client server architecture, the secured component can be structured such that as much critical data or information as possible is processed and stored by the backend portion on the backend device only, whereas the frontend portion is mainly for user interaction. In particular, the frontend portion of the secured component can mainly comprise a graphical user interface (GUI). The backend device typically can be can be one or plural server computers or one or plural virtual server instances. Thereby, the client device preferably is running a browser program wherein the frontend portion of the secured component is provided in the browser program of the client device. Such an implementation allows for a comparably simple realization of the frontend portion of the secured component. Particularly, it allows a standardized implementation which can be run on various platforms and which can be independent from the client device to a certain extent.

Preferably, the backend device is running a web service and the backend portion of the secured component is provided by the web service of the backend device. Such an implementation allows for provision of the secured component via the world wide web (WWW) or a similar network or for integrating the secured component in a web portal or web site. The backend device preferably is connected to the client device via a network. The term "network" in this context relates to any network suitable for connecting the client device with the backend device. It can particularly relate to any wired and/or wireless network which allows for an appropriate connection. Such networks can be local area networks (LAN), wide area networks (WAN), cellular networks such as, e.g., general packet radio service (GPRS) networks, universal mobile telecommunications system (UMTS) networks, long-term evolution (LTE or 4G) networks or tri-band (3G) networks, combinations thereof or the like. Such a network can particularly be the Internet via which, beyond others, the WWW is provided.

Preferably, upon the request for access to the secured component via the client device the backend portion of the secured component uniquely generates the first authentication factor and provides it to the user via the frontend portion of the secured component. Such an on-the-fly generation of a unique first authentication factor allows for increasing the security of the authentication process. For example, such unique first authentication factors can be established for a specific amount of time such that in case the authentication process is not timely finished, the first authentication factor elapses and cannot be further (mis)used. Thereby, the client device preferably provides the first authentication factor together with a session identifier, a validity period of the first authentication factor, an authentication component identifier, an access address of the authentication component, status information, a client device operating system identifier, a client device browser program identifier, a client device network address or any combination thereof. The session identifier and/or the authentication component identifier can be a numeric code such as a hash code. With such a first authentication factor numerous security relevant tasks can be fulfilled. For example, by means combining the session identifier together with the first authentication factor a specific session of the secured component can be authenticated which allows for selectively giving access to the secured component. Also multiple accesses via multiple client devices using the same first authentication factor can be prevented. Or, for example, by providing the client device IP address a location of the client device can be evaluated and, e.g. be compared to a position of the personal device.

Preferably, the first authentication factor is comprised by a numeric code or a multidimensional code such as a QR-code. Thereby, the first authentication factor can be the code or the code can comprise the first authentication factor together with additional information. Such a first authentication factor allows for comparably simple and efficient implementation.

Preferably, the authentication component is running a database and the association of the personal device to the user is stored in the database. Like this, the personal device can be logically connected to the user in a comparably efficient and secure manner. Thereby, the association of the personal device to the user preferably comprises a personal device identifier and a user identifier. The personal device identifier can be a subscriber identity module (SIM), a medium access control (MAC) address of the personal device, a seed, a combination thereof or the like. Such storing of the association between user and personal device allows for preventing any input of information for the personal identification of the user since it can be stored in the authentication component. Thus, less personal information has to be transferred and handled such that security of authentication can be further increased. Thereby, the personal device identifier preferably comprises a seed which is generated for the personal device identifier, provided to the authentication component and confirmed by the user. In this context the term "seed" can relate to a unique random code or numeric value which is for example generated on the personal device. Confirmation of the seed can comprise providing an e-mail or similar message within a predefined time frame. The seed can be transmitted as a hash transformation or in an encrypted manner.

Preferably, the authentication component provides a blocking functionality to the user for blocking the personal device associated to the user. Like this, the authentication component can allow the user to cancel his association to a specific personal device. For example, this makes possible that in a case where the user is no longer in possession of the personal device, e.g. since the personal device is lost or stolen, the user can block the personal device and an abuse of the personal device for accessing the secured component can be prevented. The blocking functionality can, e.g., be provided to the user via an interface run in a browser program or via a specific application. Also, the authentication component can provide a blocking functionality to the user for blocking the access token. Such blocking can allow the user to stop access to the secured component, e.g., if he forgets to log out the secured component after using it.

Preferably, the second authentication factor is provided to the personal device via an input unit of the personal device. The input unit can be any suitable unit of the personal device such as a keyboard, a camera, a touchscreen, a microphone, a combination thereof or the like. Like this, the second authentication factor can efficiently be provided.

Preferably, the authentication component has a frontend portion running on the personal device and a backend portion running on an authentication device. In such an implementation which can be arranged in a client server architecture, the authentication component can be structured such that as much critical data or information as possible is processed and stored by the backend portion on the authentication device only. The authentication device typically can be one or plural server computers or one or plural virtual server instances. Such an implementation allows for efficiently separating authentication processing steps between the personal device and the authentication device. In particular, the more sensitive steps can be performed on the authentication device. Thereby, the frontend portion of the authentication component preferably comprises an authentication interface, collects the first authentication factor and the second authentication factor via the authentication interface, and provides an identification token comprising the first authentication factor and the second authentication factor to the backend portion of the authentication component. Such an arrangement allows for a comparably efficient and secure implementation of the authentication component.

Thereby, the frontend portion of the authentication component preferably adds a time stamp to the identification token prior to providing it to the backend portion of the authentication component. With such a time stamp the identification can be enhanced. The backend component can then evaluate the time stamp and triggering actions based thereon. For example, a validity time frame can be set such that access to the secured component can be prevented if it is requested after the time frame. Like this, the identification token can lapse after a specific time.

Thereby, the frontend portion of the authentication component preferably adds a location stamp to the identification token prior to providing it to the backend portion of the authentication component. The location stamp can comprise any information about the location of the personal device. Particularly, in cases where the personal device is equipped with a global positioning system (GPS) receiver or the like, the location stamp can comprise the exact geographical position of the personal device. Additionally or alternatively, the location stamp can comprise information about an access point or network node the personal device is connected to, e.g., its internet protocol (IP) address or the like. Providing such a location stamp comprised in the identification token allows for many security relevant evaluations in the method according to the invention. For example, it can be assessed if the personal device is located near the client device in order to verify if is likely that the same person, i.e. the user himself, is trying to access the secured component and is requesting authentication.

Preferably, the authentication device is connected to the personal device via a network. Such a network allows for efficient and independent communication between the authentication and personal devices. Particularly, this network can be the Internet.

The personal device and the authentication device preferably are physically distinct units. Such an arrangement allows for increasing security of the authentication process.

Preferably, the authentication component calculates a trust level based on the first authentication factor and on the second authentication factor and provides the trust level in the access token to the secured component. Such an access token comprising a trust level allows the secured component to provide graduated access to the user. The secured component preferably evaluates the trust level provided in the access token and provides access to the user on the client device in accordance with the access level of the access token. Thereby, when evaluating the trust level, the secured component preferably evaluates plausibility of proximity, location of request, the kind of the second authentication factor, the type of the operating system of the client device, the type of a browser program running on the client device or a combination thereof. In this context, plausibility of proximity can relate to a comparison between GPS data and IP address data. In particular, in can relate to the question if the position according to the GPS data matches to the position according to the IP address. By evaluating the location of access, the method allows for blocking or restricting access at or to specific locations such as, e.g., in certain countries. For example, this allows for only providing full access to the secured component when the location of access is in a trusted area and restrict access outside this area. Also, plural access levels can be defined for plural areas such that, e.g., full access can be provided in a first area, restricted access in a second area and access can be blocked outside the first and second area. By evaluating the kind of the second authentication factor the method allows for taking into account if, e.g., the authentication is based on a more or less respected or trusted process. E.g., a retina scan as kind of the second authentication factor may be regarded as having a higher acceptance than manually entering a numeric code. All these factors used when evaluating the trust level allows for classifying or graduating access to the secured component. Like this, access to different parts, to different functions and/or to different data can be selectively provided dependent on the issued trust level.

Preferably, after provision of the first authentication factor to the user the secured component polls the authentication component for the access token. The term "poll" in this context can relate to regularly or periodically checking a destination for a particular action or status. Like this, once the client device has provided the first authentication factor the authentication process can be triggered. The secured component can check if the authentication component provides the access token. The access token can then be gathered and evaluated as soon as it is provided by the authentication component. This allows for an efficient implementation of the method according to the invention and to efficiently separating the secured component from the authentication component. In particular, by physically and logically separating the secured component from the authentication component security of the authentication process can be increased. Also, by such polling the authentication component does not to be aware of sensible information about the secured component such as its location or address or the like. Instead, the secured component knows where to look for the access token and checks the authentication component from its side. Thereby, the secured component stops polling the authentication component after a predefined time. Such a predefined time out can further increase security of the authentication process.

Another aspect of the present disclosure relates to a computer program comprising computer readable commands causing a computer to implement a secured component in accordance with the method of the invention and its embodiments mentioned above when being loaded to or executed by the computer. Such a computer program allows for an efficient implementation and distribution of the mentioned method or specific aspects thereof and the involved effects.

Thereby, the computer readable commands preferably cause the computer to implement a backend portion of the secured component as a web service when being loaded to or executed by the computer, wherein the backend portion of the secured component is arranged for providing a frontend portion of the secured component in a browser program of a client device allowing a user to request access to the secured component via the client device; providing a first authentication factor to the user via the frontend portion; polling an authentication component for an access token; and providing the user access to the secured component on the client device in accordance with the access token.

A further other aspect of the present disclosure relates to a computer program comprising computer readable commands causing a computer to implement an authentication component in accordance with the method of the invention and its embodiments mentioned above when being loaded to or executed by the computer. Such a computer program allows for an efficient implementation and distribution of the mentioned method or specific aspects thereof and the involved effects.

Thereby, the computer readable commands preferably cause the computer to implement a backend portion of the authentication component as a service when being loaded to or executed by the computer, wherein the backend portion of the authentication component is arranged for associating a personal device to a user; providing a frontend portion of the authentication component with an interface on the personal device of the user allowing the user to input a first authentication factor and a second authentication factor; the frontend portion of the authentication device forwarding the first authentication factor and the second identification factor to the backend portion of the authentication component; and the backend portion of the authentication component verifying identity of the user and providing an access token to the secured component.

A still further other aspect of the present disclosure relates to a computing device running a server module implementing a secured component in accordance with the method of the invention and its embodiments mentioned above. Such a computer program allows for an efficient implementation and distribution of the mentioned method or specific aspects thereof and the involved effects.

Thereby, the server module of the computing device preferably implements a backend portion of the secured component as a service, wherein the backend portion of the authentication component is arranged for providing a frontend portion of the secured component in a browser program of a client device allowing a user to request access to the secured component via the client device; providing a first authentication factor to the user via the frontend portion; polling an authentication component for an access token; and providing the user access to the secured component on the client device in accordance with the access token.

A still further other aspect of the present disclosure relates to a computing device running a server module implementing an authentication component in accordance with the method of the invention and its embodiments mentioned above. Such a computer program allows for an efficient implementation and distribution of the mentioned method or specific aspects thereof and the involved effects.

Thereby, the server module of the computing device preferably implements a backend portion of the authentication component as a web service, wherein the backend portion of the authentication component is arranged for associating a personal device to a user; providing a frontend portion of the authentication component with an interface on the personal device of the user allowing the user to input a first authentication factor and a second authentication factor; the frontend portion of the authentication device forwarding the first authentication factor and the second identification factor to the backend portion of the authentication component; and the backend portion of the authentication component verifying identity of the user and providing an access token to the secured component.

These and other aspects of the invention will be apparent from and elucidated with reference to the embodiment(s) described hereinafter.

### Brief Description of the Drawings

The invention is described in more detail hereinbelow by way of exemplary embodiments and with reference to the attached drawings, in which:
- Fig. 1: shows a schematic building block view of a first embodiment of an authentication system for implementing the invention;
- Fig. 2: shows a frontend portion of a secured component and a frontend portion of an authentication component of a second embodiment of an authentication system for implementing the invention when requesting access to the secured component;
- Fig. 3: shows the frontend portion of the secured component and the frontend portion of the authentication component from Fig. 2 when accessing the secured component;
- Fig. 4: shows a frontend portion of a secured component and a frontend portion of an authentication component of a third embodiment of an authentication system for implementing the invention when requesting access to the secured component;
- Fig. 5: shows a frontend portion of a secured component and a frontend portion of an authentication component of a fourth embodiment of an authentication system for implementing the invention when requesting access to the secured component; and
- Fig. 6: shows a frontend portion of a secured component and a frontend portion of an authentication component of a fifth embodiment of an authentication system for implementing the invention when requesting access to the secured component.

### Descritpion of Embodiments

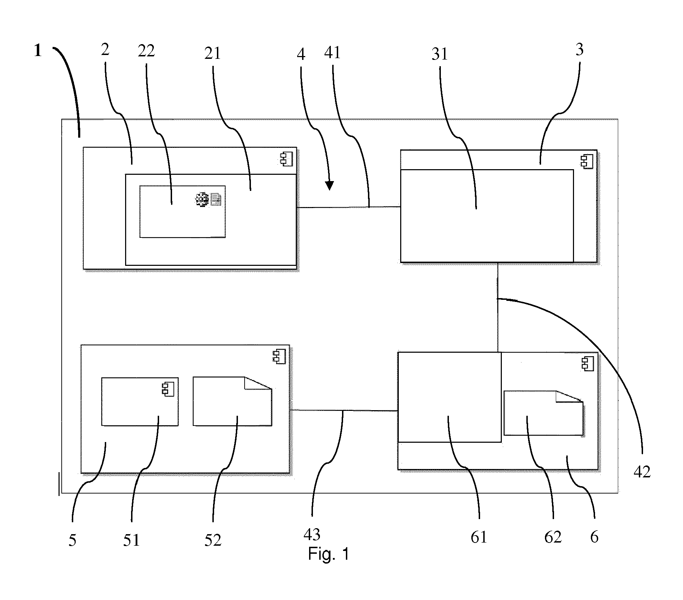

Fig. 1 shows a first embodiment of an authentication system 1 for implementing the method according to the invention. The authentication system 1 comprises a client computer 2 as client device running a frontend portion 21 of a secured component, an application server 3 as backend device running a backend portion 31 of the secured component, a personal device 5 running a frontend portion 51 of an authentication component and a authentication server 6 as authentication device running a backend portion 61 of the authentication component.

The frontend portion 21 of the secured component is implemented on the client computer 2 as a computer program having a user interface for providing information to a user and for allowing the user to interact with the secured component. The client computer 2 is connected to the application server 3 by a first network 41 of a network system 4, the application server 3 is connected to the authentication server 6 by a second network 42 of the network system 4 and the authentication server 6 is connected to the personal device 5 by a third network 43 of the network system 4.

In application of the authentication system 1 the user is authenticated as follows: The user requests access to the secured component via the frontend portion 21 of the secured component on the client device 2. The client device 2 forwards the request to the application server 3 via the first network 41. On the application server the backend portion 31 of the secured component generates a first authentication factor 22 which is transmitted to the client device 2 via the first network 41 and provided by the frontend portion 21 of the secured component to the user.

The user then provides the first authentication factor 22 together with a second authentication factor to the personal device 5 which is associated to the user at the backend portion 61 of the authentication component. In particular, the first authentication factor 22 and the second authentication factor are inputted in a user interface of the frontend portion 51 of the authentication component. The frontend portion 51 of the authentication component generates an identification token 52 which is transmitted to the backend portion 61 of the authentication component via the third network 43. The backend portion 61 of the authentication component evaluates the identification token 52 for verifying the identity of the user. In particular, it verifies if the personal device 5 is in correct association with the user and if the first authentication factor 22 and the second authentication factor are matching. Then it evaluates the identification token 52 with regard to the first authentication factor 22, the second authentication factor and the additional information integrated in the identification token 52.

The backend portion 61 of the authentication component then provides an access token 62 on the authentication server 6 in accordance with the results of the evaluation of the identification token 52. In the meantime, the backend portion 31 of the secured component polls the authentication server 6 via the second network 42. As soon as the access token 62 is provided by the backend portion 61 of the authentication component and the backend portion 31 of the secured component detects it by polling the authentication server 6, the access token 62 is transferred to the application server 3 and evaluated by the backend portion 31 of the secured component. The backend portion 31 of the secured component is then providing the user access to the secured component via the client device 2 in accordance with the access token 62 and the trust level provided therein.

The authentication system 1 in the general form shown in Fig. 1 can be used in a broad variance of applications.

For example, in case of authentication on a web portal, the frontend portion 21 of the secured component is implemented in a browser program running on the client computer 2 which, e.g. can be a public computer at an airport. The request for access is the input of a web portal specific uniform resource locator (URL) into the browser program which directs to the application server 3 being a web application server or a web gateway. The backend portion of the secured component provides an identification code in a web page as link which comprises the first authentication factor 22 displayed in the browser window of the client computer 2. The identification code which, e.g., is a QR-Code, comprises additional information and particularly information about the appropriate authentication service being provided on the authentication server 6.

Together with provision of the first authentication factor 22 the backend portion 31 of the secured component starts to regularly check the authentication of the user at the authentication server 6, i.e. it polls the authentication server 6.

The user then inputs the first authentication factor 22 in the mobile device 5 which runs a computer program being the frontend portion 51 of the authentication component. Additionally, the user inputs the second authentication factor in the mobile device 5 via the frontend portion 51 of the authentication component. The frontend portion 51 of the authentication component evaluates the identification code and the second authentication factor. In particular, it verifies plausibility of the first authentication factor 22 and the second authentication factor, e.g. by calculating checksums, and picks the appropriate authentication service. If plausibility of the first authentication factor 22 and the second authentication factor is confirmed, the frontend portion 51 of the authentication component generates the identification token 52 and forwards it to the appropriate authentication service, i.e. the backend portion 61 of the authentication component running on the authentication server 6. The identification token 52 comprises the first authentication factor 22, the second authentication factor, a mobile device identifier and additional information in clean or encrypted form.

The backend portion 61 of the authentication component evaluates the identification token 52. In particular, it verifies if the user and the mobile device 5 are in a correct association to each other, it calculates a trust level for the requested access and generates an according access token 62.

The access token 62 is then made available to the backend portion 31 of the secured component on the authentication server 6. The backend portion 31 of the secured component gathers the access token 62 and evaluates it. In accordance with the trust level provided in the access token 62 the backend portion 31 of the secured component then gives the user access to the secured component via its frontend portion 21 running on the client device 2.

For calculating the trust level, the backend portion 61 of the authentication component can use the additional information comprised in the identification token 52. Depending on the type of information provided it can particularly consider if the identification token has been forwarded via a short message service (SMS) message or by in a specific ticket or message generated by the frontend portion of the authentication device in a predefined format, if GPS or other position data is comprised in the identification token, in the affirmative if the access request is performed in a permitted area and if the location is plausible, e.g. compared to the position of the client device 2, if the authentication includes a user password, the type of operating system and browser program, and/or if the request originates from a protected browser session. Further to the mentioned additional information various other information can be involved.

The backend portion 62 of the authentication component can, e.g., calculate the trust level as shown hereafter.

**Table 1: Example of a calculation of trust level**

| **Additional Information** | **Category** | **Weight** | **Present** | **Result** |
|---|---|---|---|---|
| PIN | Access | 3 | 0 | 0 |
| Password | Access | 27 | 1 | 27 |
| GPS data | Position | 9 | 1 | 9 |
| Country via GPS | Position | 81 | 1 | 81 |
| Country via IP | Position | 27 | 0 | 0 |
| Secured browser | Environment | 27 | 0 | 0 |
| | | | **Total** | **117** |

Based on the calculated total points the backend portion 62 of the authentication component can, e.g., pick the trust level from a predefined lookup table.

**Table 2: Example of a trust level lookup table**

| **Minimum Total Points** | **Minimum No. of Add. Info.** | **Minimum Position Info.** | **Minimum Environment Info.** | **Trust Level** |
|---|---|---|---|---|
| >=117 | 2 | 2 | 1 | 4 |
| 54 | 1 | 1 | 0 | 3 |
| 27 | 1 | 0 | 0 | 2 |
| 3 | 1 | 0 | 0 | 1 |
| 0 | 0 | 0 | 0 | 0 |

The backend portion 31 of the secured component can provide access to the secured component by evaluating the trust level in a graduated manner. For example, different access level may require a minimum trust level to be provided. This can be stored in a lookup table to be picked when evaluating the access token 62.

**Table 3: Example of a secured component access lookup table**

| **Minimum Trust Level** | **Application Code** | **Description** |
|---|---|---|
| 27 | OWA | Outlook Web Access - Restricted Access |
| 54 | OWA | Outlook Web Access - Full Access |
| 54 | SP | Sharepoint - Limited |
| 117 | SP | Sharepoint - Full Access |
| 117 | CRM | CRM System - Full Access |

The following applies to the rest of this description. If, in order to clarify the drawings, a figure contains reference signs which are not explained in the directly associated part of the description, then it is referred to previous description sections.

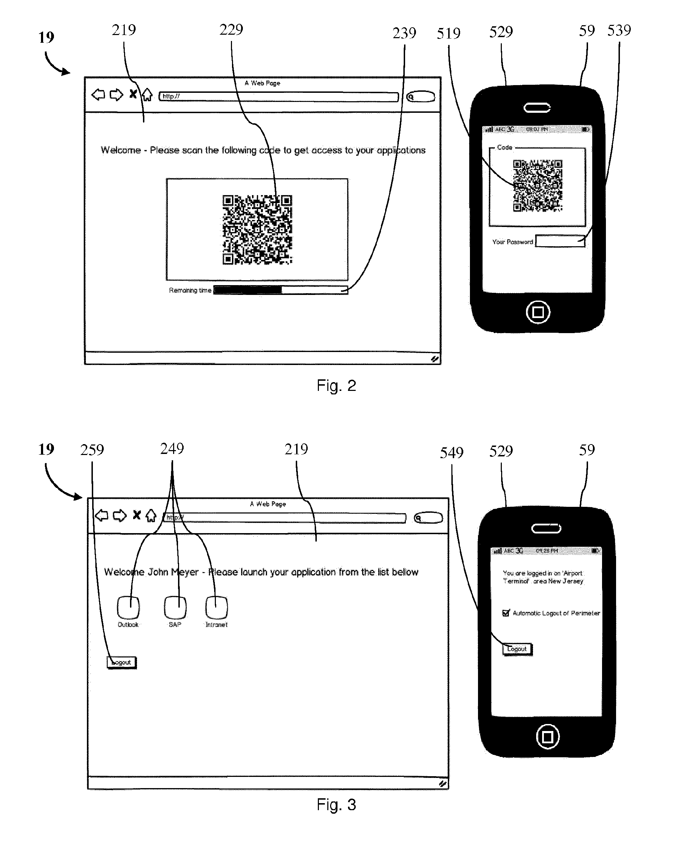

In the following, further embodiments of authentication systems for implementing the invention are described and shown in Fig. 2 to Fig. 6. Thereby, only specific aspects are explicitly shown and described. In general, the described authentication systems can be embodied with analogue or similar components and features as the authentication system 1 shown in Fig. 1.

Fig. 2 shows a second embodiment of an authentication system 19 for implementing the invention. The authentication system 19 comprises a web browser application 219 running on a client device as frontend portion of a secured component and a smartphone 59 as personal device. The smartphone 59 is running an authentication application 529 as frontend portion of an authentication component.

For authentication the browser application 219 displays a QR-code 229 as first authentication factor which is transmitted from a backend portion of the secured component after a user has requested access to the secured component. The browser application further shows a progress bar 239 representing a validity time range wherein the authentication process has to be finished before the progress bar 239 is completed. Otherwise, the authentication process is timed out.

The QR-code 229 is scanned on the screen of the client device by the authentication application 529 wherein a standard camera of the smartphone 59 is used. The authentication application 529 has a user interface displaying the scanned QR-code 519 and a password field 539 in which the user has to input a password as second authentication factor. Once the authentication application 529 has gathered the scanned QR-code 519 and the password it generates an identification token and forwards it to the backend portion of the authentication component running on a authentication server.

As shown in Fig. 3, after authentication of the user succeeded the browser program 219 displays buttons 249 for accessing different application. For example, one of the buttons 249 opens a web interface of an e-mail client, another one of the buttons 249 opens a web interface of a business application and still another one of the buttons 249 opens a file access interface. Furthermore, the browser program 219 displays a logout button 259. By clicking on the logout button 259 the user can terminate his session and authorized access to the secured component is finished. Additionally, also the authentication application 529 displays a logout button 549 via which the user can terminate his session. This can particularly be helpful for terminating access to the secured component from the personal device 59, e.g. if the users forgets to properly logout at the client device.

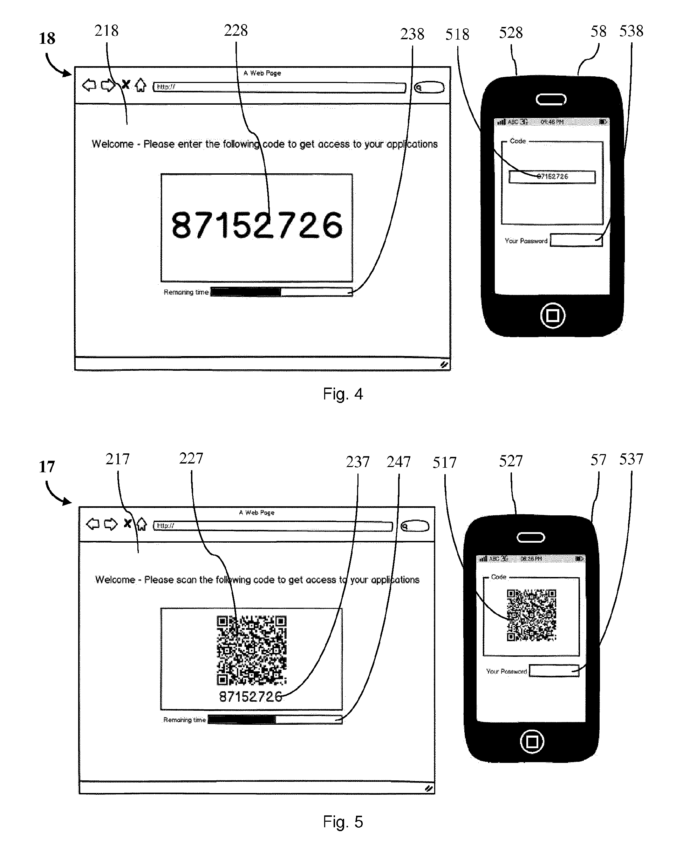

Fig. 4 shows a third embodiment of an authentication system 18 for implementing the invention. The authentication system 18 comprises a web browser application 218 running on a client device as frontend portion of a secured component and a smartphone 58 as personal device. The smartphone 58 is running an authentication application 528 as frontend portion of an authentication component. For authentication the browser application 218 displays a numeric code 228 as first authentication factor which is transmitted from a backend portion of the secured component after a user has requested access to the secured component. The browser application further shows a progress bar 238 representing a validity time range.

The numeric code 228 is inputted in a code field 518 of a user interface of the authentication application 528 wherein a standard virtual keyboard of the smartphone 58 is used. The authentication application 528 has a password field 538 in which the user inputs a password as second authentication factor. Once the authentication application 528 has gathered the numeric code 228 and the password it generates an identification token and forwards it to the backend portion of the authentication component running on an authentication server.

In Fig. 5 a fourth embodiment of an authentication system 17 for implementing the invention is shown. The authentication system 17 comprises a web browser application 217 running on a client device as frontend portion of a secured component and a smartphone 57 as personal device. The smartphone 57 is running an authentication application 527 as frontend portion of an authentication component. For authentication the browser application 217 displays QR-code 227 and a numeric code 238 as first authentication factors which are transmitted from a backend portion of the secured component after a user has requested access to the secured component. The browser application further shows a progress bar 247 representing a validity time range.

For authentication, the user either inputs the numeric code 227 in a code field of a user interface of the authentication application 527 wherein a standard virtual keyboard of the smartphone 58 is used, or scans the QR-code 227 on the screen of the client device by the authentication application 527 wherein a standard camera of the smartphone 57 is used. The authentication application 527 further has a password field 537 in which the user inputs a password as second authentication factor. Once the authentication application 527 has gathered the QR-code 227 and/or the numeric code 237 and the password it generates an identification token and forwards it to the backend portion of the authentication component running on an authentication server.

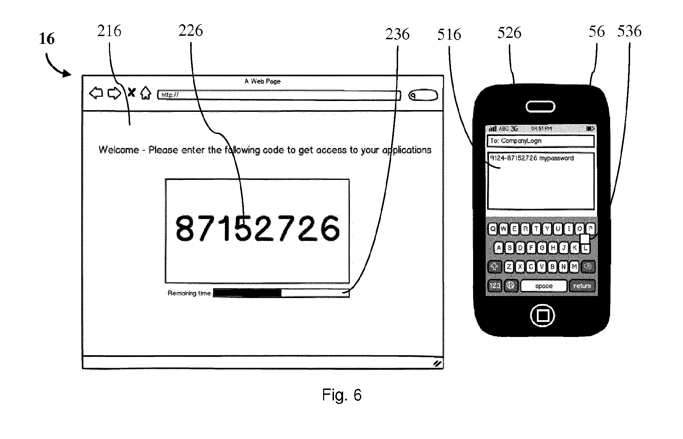

Fig. 6 shows a fifth embodiment of an authentication system 16 for implementing the invention. The authentication system 16 comprises a web browser application 216 running on a client device as frontend portion of a secured component and a smartphone 56 as personal device. The smartphone 56 is running a standard SMS application 526 as frontend portion of an authentication component. For authentication the browser application 216 displays a numeric code 226 as first authentication factor which is transmitted from a backend portion of the secured component after a user has requested access to the secured component. The browser application further shows a progress bar 236 representing a validity time range.

The user inputs a PIN as a first portion of a second authentication factor followed by the numeric code 226 followed by a password as a second portion of the second authentication factor in a SMS field 516 of a user interface of the SMS application 526 wherein a standard virtual keyboard of the smartphone 56 is used. The user further inputs the telephone number or address of the appropriate authentication service and sends the composed SMS message to the backend portion of a authentication component running on an authentication server.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

The invention also covers all further features shown in the Figs. individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims ort the exemplary embodiments as well as subject matter comprising said features. Furthermore, in the claims the word "comprising" does not exclude other elements or steps, and the indefinite article "a" or "an" does not exclude a plurality. A single unit or step may fulfill the functions of several features recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Furthermore, a computer program can also be a data structure product or a signal for embodying a specific method such as the method according to the invention. Any reference signs in the claims should not be construed as limiting the scope.

The present disclosure explicitly also comprises following embodiments of subject-matter in the context of the invention.

Embodiment 1 is a computer implemented multi-factor authentication method for authenticating a user of a secured component, comprising the user requesting access to the secured component via a client device; the client device providing a first authentication factor to the user; the user providing the first authentication factor to a personal device which is associated to the user at an authentication component, wherein the client device and the personal device are physically distinct units; the user providing a second authentication factor to the personal device; the personal device forwarding the first authentication factor and the second identification factor to the authentication component; the authentication component verifying identity of the user and providing an access token to the secured component; and the secured component providing the user access to the secured component on the client device in accordance with the access token.

Embodiment 2 is the method of embodiment 1, wherein the secured component has a frontend portion running on the client device and a backend portion running on a backend device.

Embodiment 3 is the method of embodiment 2, wherein the client device is running a browser program and the frontend portion of the secured component is provided in the browser program of the client device.

Embodiment 4 is the method of embodiment 2 or 3, in which the backend device is running a web service and the backend portion of the secured component is provided by the web service of the backend device.

Embodiment 5 is the method of any one of embodiments 2 to 4, wherein the backend device is connected to the client device via a network.

Embodiment 6 is the method of any one of embodiments 2 to 5, wherein upon the request for access to the secured component via the client device the backend portion of the secured component uniquely generates the first authentication factor and provides it to the user via the frontend portion of the secured component.

Embodiment 7 is the method of embodiment 6, wherein the client device provides the first authentication factor together with a session identifier, a validity period of the first authentication factor, an authentication component identifier, an access address of the authentication component, status information, a client device operating system identifier, a client device browser program identifier, a client device network address or any combination thereof.

Embodiment 8 is the method of any one of embodiments 1 to 7, wherein the first authentication factor is comprised by a numeric code or a multidimensional code such as a QR code.

Embodiment 9 is the method of any one of embodiments 1 to 8, wherein the client device and the personal device are physically distinct units.

Embodiment 10 is the method of any one of embodiments 1 to 9, wherein the authentication component is running a database and the association of the personal device to the user is stored in the database.

Embodiment 11 is the method of embodiment 10, wherein the association of the personal device to the user comprises a personal device identifier and a user identifier.

Embodiment 12 is the method of embodiment 11, wherein the personal device identifier comprises a seed which is generated for the personal device identifier, provided to the authentication component and confirmed by the user.

Embodiment 13 is the method of any one of embodiments 1 to 12, wherein the authentication component provides a blocking functionality to the user for blocking the personal device associated to the user.

Embodiment 14 is the method of any one of embodiments 1 to 13, wherein the second authentication factor is provided to the personal device via an input unit of the personal device.

Embodiment 15 is the method of any one of embodiments 1 to 14, wherein the authentication component has a frontend portion running on the personal device and a backend portion running on an authentication device.

Embodiment 16 is the method of embodiment 15, wherein the frontend portion of the authentication component comprises an authentication interface, collects the first authentication factor and the second authentication factor via the authentication interface, and provides an identification token comprising the first authentication factor and the second authentication factor to the backend portion of the authentication component.

Embodiment 17 is the method of embodiment 16, in which the frontend portion of the authentication component adds a time stamp to the identification token prior to providing it to the backend portion of the authentication component.

Embodiment 18 is the method of embodiment 16 or 17, wherein the frontend portion of the authentication component adds a location stamp to the identification token prior to providing it to the backend portion of the authentication component.

Embodiment 19 is the method of any one of embodiments 15 to 18, wherein the authentication device is connected to the personal device via a network.

Embodiment 20 is the method of any one of embodiments 15 to 19, wherein the personal device and the authentication device are physically distinct units.

Embodiment 21 is the method of any one of embodiments 1 to 20, in which the authentication component calculates a trust level based on the first authentication factor and on the second authentication factor and provides the trust level in the access token to the secured component.

Embodiment 22 is the method of embodiment 21, wherein the secured component evaluates the trust level provided in the access token and provides access to the user on the client device in accordance with the access level of the access token.

Embodiment 23 is the method of embodiment 22, wherein when evaluating the trust level the secured component evaluates plausibility of proximity, location of request, the kind of the second authentication factor, the type of the operating system of the client device, the type of a browser program running on the client device or a combination thereof.

Embodiment 24 is the method of any one of embodiments 1 to 23, wherein after provision of the first authentication factor to the user the secured component polls the authentication component for the access token.

Embodiment 25 is the method of embodiment 24, wherein the secured component stops polling the authentication component after a predefined time.

Embodiment 26 is a computer program comprising computer readable commands causing a computer to implement a secured component in accordance with the method of any one of embodiments 1 to 25 when being loaded to or executed by the computer.

Embodiment 27 is the computer program of embodiment 26, wherein the computer readable commands cause the computer to implement a backend portion of the secured component as a web service when being loaded to or executed by the computer, wherein the backend portion of the secured component is arranged for providing a frontend portion of the secured component in a browser program of a client device allowing a user to request access to the secured component via the client device; providing a first authentication factor to the user via the frontend portion; polling an authentication component for an access token; and providing the user access to the secured component on the client device in accordance with the access token.

Embodiment 26 is a computer Computer program comprising computer readable commands causing a computer to implement an authentication component in accordance with the method of any one of embodiments 1 to 25 when being loaded to or executed by the computer.

Embodiment 28 is the computer program of embodiment 27, wherein the computer readable commands cause the computer to implement a backend portion of the authentication component as a service when being loaded to or executed by the computer, wherein the backend portion of the authentication component is arranged for associating a personal device to a user; providing a frontend portion of the authentication component with an interface on the personal device of the user allowing the user to input a first authentication factor and a second authentication factor; the frontend portion of the authentication device forwarding the first authentication factor and the second identification factor to the backend portion of the authentication component; and the backend portion of the authentication component verifying identity of the user and providing an access token to the secured component.

Embodiment 29 is a computing device running a server module implementing a secured component in accordance with the method of any one of embodiments 1 to 25.

Embodiment 30 is the computing device of embodiment 29, wherein the server module implements a backend portion of the secured component as a service, wherein the backend portion of the authentication component is arranged for providing a frontend portion of the secured component in a browser program of a client device allowing a user to request access to the secured component via the client device; providing a first authentication factor to the user via the frontend portion; polling an authentication component for an access token; and providing the user access to the secured component on the client device in accordance with the access token.

Embodiment 31 is a computing device running a server module implementing an authentication component in accordance with the method of any one of embodiemnts 1 to 25.

Embodiment 32 is the computing device according to embodiment 31, wherein the server module implements a backend portion of the authentication component as a web service, wherein the backend portion of the authentication component is arranged for associating a personal device to a user; providing a frontend portion of the authentication component with an interface on the personal device of the user allowing the user to input a first authentication factor and a second authentication factor; the frontend portion of the authentication device forwarding the first authentication factor and the second identification factor to the backend portion of the authentication component; and the backend portion of the authentication component verifying identity of the user and providing an access token to the secured component.

## Claims

1. Computer implemented multi-factor authentication method for authenticating a user of a secured component (21, 31; 216; 217; 218; 219), comprising
the user requesting access to the secured component (21, 31; 216; 217; 218; 219) via a client device (2);
the client device (2) providing a first authentication factor (22; 226; 227, 237; 228; 229) to the user;
the user providing the first authentication factor (22; 226; 227, 237; 228; 229) to a personal device (5; 56; 57; 58; 59) which is associated to the user at an authentication component (51, 61; 526, 527, 528, 529), wherein the client device (2) and the personal device (5; 56; 57; 58; 59) are physically distinct units;
the user providing a second authentication factor to the personal device (5; 56; 57; 58; 59);
the personal device (5; 56; 57; 58; 59) forwarding the first authentication factor (22; 226; 227, 237; 228; 229) and the second identification factor to the authentication component (51, 61; 526, 527, 528, 529);
the authentication component (51, 61; 526, 527, 528, 529) verifying identity of the user and providing an access token (62) to the secured component (21, 31; 216; 217; 218; 219); and
the secured component (21, 31; 216; 217; 218; 219) providing the user access to the secured component (21, 31; 216; 217; 218; 219) on the client device (2) in accordance with the access token (62).

2. Method according to claim 1, in which the secured component (21, 31; 216; 217; 218; 219) has a frontend portion (21; 216; 217; 218; 219) running on the client device (2) and a backend portion (31) running on a backend device (3).

3. Method according to claim 2, in which the client device (2) is running a browser program and the frontend portion (21; 216; 217; 218; 219) of the secured component (21, 31; 216; 217; 218; 219) is provided in the browser program of the client device.

4. Method according to claim 2 or 3, in which upon the request for access to the secured component (21, 31; 216; 217; 218; 219) via the client device (2) the backend portion (31) of the secured component (21, 31; 216; 217; 218; 219) uniquely generates the first authentication factor (22; 226; 227, 237; 228; 229) and provides it to the user via the frontend portion (21; 216; 217; 218; 219) of the secured component (21, 31; 216; 217; 218; 219).

5. Method according to claim 4, in which the client device (2) provides the first authentication factor (22; 226; 227, 237; 228; 229) together with a session identifier, a validity period of the first authentication factor, an authentication component identifier, an access address of the authentication component (51, 61; 526, 527, 528, 529), status information, a client device operating system identifier, a client device browser program identifier, a client device network address or any combination thereof.

6. Method according to any one of the preceding claims, wherein the first authentication factor (22; 226; 227, 237; 228; 229) is comprised in a numeric code (226; 237; 228) or a multidimensional code (227; 229) such as a QR-code.

7. Method according to any one of the preceding claims, in which the authentication component (51, 61; 526, 527, 528, 529) is running a database and the association of the personal device (5; 56; 57; 58; 59) to the user is stored in the database, wherein the association of the personal device (5; 56; 57; 58; 59) to the user preferably comprises a personal device identifier and a user identifier.

8. Method according to claim 7, in which the personal device identifier comprises a seed which is generated for the personal device identifier, provided to the authentication component (51, 61; 526, 527, 528, 529) and confirmed by the user.

9. Method according to any one of the preceding claims, in which the authentication component (51, 61; 526, 527, 528, 529) provides a blocking functionality to the user for blocking the personal device (5; 56; 57; 58; 59) associated to the user.

10. Method according to any of the preceding claims, in which the authentication component (51, 61; 526, 527, 528, 529) has a frontend portion (51; 526, 527, 528, 529) running on the personal device (5; 56; 57; 58; 59) and a backend portion (61) running on an authentication device (6), wherein the frontend portion (51; 526, 527, 528, 529) of the authentication component (51, 61; 526, 527, 528, 529) preferably comprises an authentication interface, collects the first authentication factor (22; 226; 227, 237; 228; 229) and the second authentication factor via the authentication interface, and provides an identification token (52) comprising the first authentication factor (22; 226; 227, 237; 228; 229) and the second authentication factor to the backend portion (61) of the authentication component (51, 61; 526, 527, 528, 529).

11. Method according to claim 10, in which the frontend portion (51; 526, 527, 528, 529) of the authentication component (51, 61; 526, 527, 528, 529) adds a location stamp to the identification token prior to providing it to the backend portion (61) of the authentication component (51, 61; 526, 527, 528, 529).

12. Method according to claim 10 or 11, wherein the authentication device (6) is connected to the personal device (5; 56; 57; 58; 59) via a network (4).

13. Method according to any one of the preceding claims, in which the authentication component (51, 61; 526, 527, 528, 529) calculates a trust level based on the first authentication factor (22; 226; 227, 237; 228; 229) and on the second authentication factor and provides the trust level in the access token (62) to the secured component (21, 31; 216; 217; 218; 219).

14. Method according to claim 13, wherein the secured component (21, 31; 216; 217; 218; 219) evaluates the trust level provided in the access token (62) and provides access to the user on the client device (2) in accordance with the access level of the access token (62).

15. Method according to claim 14, wherein when evaluating the trust level the secured component (21, 31; 216; 217; 218; 219) evaluates plausibility of proximity, location of request, the kind of the second authentication factor, the type of the operating system of the client device, the type of a browser program running on the client device (2) or a combination thereof.

16. Method according to any one of the preceding claims, in which after provision of the first authentication factor (22; 226; 227, 237; 228; 229) to the user the secured component (21, 31; 216; 217; 218; 219) polls the authentication component (51, 61; 526, 527, 528, 529) for the access token (62) wherein the secured component (21, 31; 216; 217; 218; 219) preferably stops polling the authentication component (51, 61; 526, 527, 528, 529) after a predefined time.
